Europäisches Patentamt

(19) European Patent Office

Office européen des brevets

(11) **EP 0 666 786 B1**

(12) **EUROPEAN PATENT SPECIFICATION**

(45) Date of publication and mention
of the grant of the patent:
**20.03.1996 Bulletin 1996/12**

(51) Int. Cl.$^6$: **B23K 35/368**

(86) International application number: **PCT/EP93/03071**

(21) Application number: **93924092.5**

(87) International publication number:
**WO 94/09941 (11.05.1994 Gazette 1994/11)**

(22) Date of filing: **02.11.1993**

(54) **NON-ALLOYED BASIC CORED WIRE FOR ELECTRIC ARC WELDING WITH GAS SHIELDING**

Nichtlegierter basischer Seleendraht zum elektrischen Lichtbogenschweissen in Schutzgas

FIL A NOYAU BASIQUE SANS ALLIAGE DESTINE AU SOUDAGE A L'ARC ELECTRIQUE A ENVELOPPE DE GAZ PROTECTEUR

(84) Designated Contracting States:
**BE CH DE ES FR LI NL**

(30) Priority: **05.11.1992 IT VE920049**

(43) Date of publication of application:
**16.08.1995 Bulletin 1995/33**

(73) Proprietor: **TRAFILERIE DI CITTADELLA S.P.A.**
**I-35013 Cittadella (IT)**

(72) Inventor: **ROCCO, Elio**
**I-35013 Cittadella (IT)**

(74) Representative: **Piovesana, Paolo**
**Corso del Popolo, 70**
**I-30172 Venezia-Mestre (IT)**

(56) References cited:
**FR-A- 2 255 992**      **FR-A- 2 345 260**
**GB-A- 1 538 973**      **US-A- 3 735 090**

## Description

This invention relates to a non-alloyed basic cored wire for electric arc welding with gas shielding, particularly of carbon steels, including fine grained.

Basic cored wire for electric arc welding is known, ie wire obtained by tilling a suitable metal support with special mineral mixtures known as fluxes. The definition "basic" is attributed on the basis of the chemical composition of the flux forming the wire core, and the degree of basicity is given by the (Boniszweski) formula:

$$I_b = \frac{CaO + MgO + CaF_2 + K_2O + Na_2O + 1/2(MnO + FeO)}{SiO_2 + 1/2(Al_2O_3 + TiO_2 + ZrO_2)}$$

If $I_b > 1$, the wire is basic.

This known wire has however certain drawbacks, and in particular:

- "large droplet" melting, ie in the form of large-dimension droplets, making position welding very difficult and of unpleasant appearance, in particular vertical (ascending and descending) and overhead welding, and
- the production of a very fluid slag which is unable to provide any support action for the deposited material.

Rutile-cored wire is also known, thus called because the substance characterising the internal flux is rutile (natural $TiO_2$). This wire is suitable for welding carbon steel, even of fine grain, and is good for position-welding, with weld bends of good appearance and with good slag separation. It is however generally sensitive to cracking and porosity, especially in welding galvanized or varnish-coated sheet, and has limited mechanical characteristics at low temperature.

An object of the invention is to provide a basic cored wire having all the advantages of traditional basic cored wire but not its defects, and instead having the corresponding merits of rutile cored wire.

A particular object of the invention is to provide a non-alloyed basic cored wire for use in a protective atmosphere, which associates good workability in all positions with very low sensitivity to surface treatment undergone by the sheet steel (galvanized or varnish-coated), excellent mechanical characteristics even at low temperature, regular weld beads free from lateral incisions, and easily removable slag and splashes.

A further object of the invention is to provide a basic cored wire of high percentage yield, ie a ratio of deposited material weight to wire weight before use exceeding 90%.

These and further objects which will be apparent from the ensuing description are attained according to the invention by a non-alloyed basic cored wire as described in claim 1.

A preferred embodiment of the present invention is described in detail hereinafter by way of non-limiting example.

As stated the basic cored wire according to the invention comprises an internally hollow steel support of about 14 mm diameter, which is then drawn to a minimum diameter of 1 mm, into the interior of which there is introduced a mixture containing weld materials, slagging agents and deoxidant.

The weld materials consist essentially of powdered iron and the metal support, the slagging agents consist essentially of wollastonite, magnesium oxide and alumina, and the deoxidants consist essentially of alloys such as ferrosilicon, aluminium-magnesium, ferromanganese and ferrotitanium.

The chemical specification of the mixture by weight is as follows:

| | |
|---|---|
| $Mn_{tot}$ | 15 - 19%, in particular 17% |
| $Si_{tot}$ | 11,5 - 14,5%, in particular 13% |
| $Fe_{tot}$ | 34 - 40%, in particular 37% |
| CaO | 18 - 22%, in particular 20% |
| MgO | 6 - 8%, in particular 7% |
| $Al_2O_3$ | 5 - 7%, in particular 6% |

The manganese is introduced into the mixture in the form of manganese slag and Fe-Mn.

The silicon is introduced in the form of manganese slag and/or wollastonite and/or ferrosilicon.

The iron is introduced in the form of powdered iron and ferro-alloys (ferrosilicon, ferromanganese, ferrotitanium).

CaO is introduced in the form of wollastonite and manganese slag. MgO is introduced as such. $Al_2O_3$ is introduced as such.

A typical composition of the mixture according to the invention in terms of percentage by weight is as follows:

| Manganese slag | 15,5% |
|---|---|
| Wollastonite | 29,5% |
| Magnesium oxide | 3,0% |
| Alumina | 2,0% |
| Ferrosilicon | 9,0% |
| Aluminium-magnesium | 4,0% |
| Ferromanganese | 18,0% |
| Powdered iron | 18,3% |
| Ferrotitanium | 0,7% |

In practice the invention is based essentially on replacing the $CaF_2$ slagging agent of known basic cored wires with wollastonite, which has a higher melting point and is therefore more greatly affected by the (negative) temperature change on withdrawing the arc during melting. Consequently the slagging agent becomes viscous more rapidly, and is therefore able to exert a supporting action on the molten mass, which is formed from the constituent material of the tubular support, the material contained within the tubular support, and the constituent material of the workpieces to be welded.

Experimentally it has been found that with the cored wire according to the invention, position welds can be effected, in particular vertical (ascending and descending) and overhead welds, with a resultant weld bead of better appearance than that obtainable with traditional basic cored wire, this also being due to the fact that during use the wire melts in the form of small-dimension droplets.

In particular the chemical analysis of all-welded metal by weight was found on an average to be the following:

C = 0,05%
Mn = 1,30%
Si = 0,25%
P < 0,025%
S < 0,025%
Cr, Ni, Mo = impurity traces,
the wire hence being free of alloying elements.

Typical mechanical characteristics of the all-welded product are as follows:

ultimate tensile stress $\geq$ 520 N/mm$^2$,
elastic limit $\geq$ 430 N/mm$^2$,
percentage elongation on length of 5 times diameter $\geq$ 26% impact strenght at temperature of -30°C $\geq$ 100J.

From the aforegoing the cored wire according to the present invention has the following characteristics:

- a non-alloyed basic cored wire,
- usable for welding constructional carbon steels and for applications requiring optimum mechanical characteristics at low temperature,
- suitable for welding in all normal positions (flat, frontal plane, vertical ascending, vertical descending, overhead),
- suitable for welding constructional carbon steels including those with surface pretreatment (glavanized or varnish-coated),
- high yielding in the sense of a high ratio of weight of deposited material to weight of wire.

## Claims

1. A non-alloyed basic cored wire for electric arc welding with gas shielding, comprising an internally hollow filiform metal support filled with a mixture containing weld material, slagging agents and deoxidants, characterised in that said mixture has the following chemical specification by weight:

| | |
|---|---|
| $Mn_{tot}$ | 15 - 19% |
| $Si_{tot}$ | 11,5 - 14,5% |
| $Fe_{tot}$ | 34 - 40% |
| CaO | 18 - 22% |
| MgO | 6 - 8% |
| $Al_2O_3$ | 5 - 7%. |

2. A basic cored wire as claimed in claim 1, characterised in that the mixture has the following chemical specification by weight:

| | |
|---|---|
| $Mn_{tot}$ | 17% |
| $Si_{tot}$ | 13% |
| $Fe_{tot}$ | 37% |
| CaO | 20% |
| MgO | 7% |
| $Al_2O_3$ | 6%. |

3. A basis cored wire as claimed in claim 1, characterised in that the weld materials consist of powdered iron and the metal support.

4. A basic cored wire as claimed in claim 1, characterised in that the slagging agents consist of wollastonite, magnesium oxide and alumina.

5. A basic cored wire as claimed in claim 1, characterised in that the deoxidants consist of ferrosilicon, aluminium-magnesium, ferromanganese and ferrotitanium alloys.

6. A basic cored wire as claimed in claim 1, characterised in that the manganese is introduced into the mixture in the form of manganese slag and Fe-Mn.

7. A basic cored wire as claimed in claim 1, characterised in that the silicon is introduced into the mixture in the form of manganese slag and/or wollastonite and/or ferrosilicon.

8. A basic cored wire as claimed in claim 1, characterised in that the iron is introduced in the form of powdered iron and ferro-alloys (ferrosilicon, ferromanganese, ferrotitanium).

9. A basic cored wire as claimed in claim 1, characterised in that the CaO is introduced in the form of wollastonite and manganese slag.

10. A basic cored wire as claimed in claim 1, characterised in that the MgO is introduced as such.

11. A basic cored wire as claimed in claim 1, characterised in that the $Al_2O_3$ is introduced as such.

EP 0 666 786 B1

**Patentansprüche**

1. Nicht legierter basischer Seelendraht zum elektrischen Lichtbogenschweißen in Schutzgas, umfassend einen innen hohlen fadenförmigen Metallträger, der mit einem Gemisch gefüllt ist, das Schweißmaterial, Schlackenmittel und Deoxidantien enthält, dadurch gekennzeichnet, daß das besagte Gemisch die folgende chemische Gewichtszusammensetzung aufweist:

| | |
|---|---|
| $Mn_{tot}$ | 15 - 19% |
| $Si_{tot}$ | 11,5 - 14,5% |
| $Fe_{tot}$ | 34 - 40% |
| CaO | 18 - 22 |
| MgO | 6 - 8% |
| $Al_2O_3$ | 5 - 7% |

2. Basischer Seelendraht nach Anspruch 1, dadurch gekennzeichnet, daß das Gemisch folgende chemische Gewichtszusammensetzung aufweist:

| | |
|---|---|
| $Mn_{tot}$ | 17% |
| $Si_{tot}$ | 13% |
| $Fe_{tot}$ | 37% |
| CaO | 20% |
| MgO | 7% |
| $Al_2O_3$ | 6% |

3. Basischer Seelendraht nach Anspruch 1, dadurch gekennzeichnet, daß die Schweißmaterialien aus pulverförmigem Eisen und dem Metallträger bestehen.

4. Basischer Seelendraht nach Anspruch 1, dadurch gekennzeichnet, daß die Schlackenmittel aus Wollastonit, Magnesiumoxid und Aluminiumoxid bestehen.

5. Basischer Seelendraht nach Anspruch 1, dadurch gekennzeichnet, daß die Deoxidantien aus Ferrosilizium, Aluminium-Magnesium, Ferromangan und Ferrotitan-Legierungen bestehen.

6. Basischer Seelendraht nach Anspruch 1, dadurch gekennzeichnet, daß das Mangan in das Gemisch in Form von Manganschlacke und Fe-Mn eingebracht wird.

7. Basischer Seelendraht nach Anspruch 1, dadurch gekennzeichnet, daß das Silizium in das Gemisch in Form von Manganschlacke und/oder Wollastonit und/oder Ferrosilizium eingebracht wird.

8. Basischer Seelendraht nach Anspruch 1, dadurch gekennzeichnet, daß Eisen in Form von pulverförmigem Eisen und Ferro-Legierungen (Ferrosilizium, Ferromangan, Ferrotitan) eingebracht wird.

9. Basischer Seelendraht nach Anspruch 1, dadurch gekennzeichnet, daß das CaO in Form on Wollastonit und Manganschlacke eingebracht wird.

10. Basischer Seelendraht nach Anspruch 1, dadurch gekennzeichnet, daß das MgO als solches eingebracht wird.

5

11. Basischer Seelendraht nach Anspruch 1, dadurch gekennzeichnet, daß das $Al_2O_3$ als solches eingebracht wird.

**Revendications**

1. Fil à âme basique non allié pour le soudage à l'arc électrique avec écran de gaz, comprenant un support métallique filiforme creux à l'intérieur, chargé d'un mélange contenant le matériau d'apport ou de soudage, des agents formant le flux et des désoxydants, caractérisé en ce que le mélange précité possède la composition chimique suivante en poids :

| | |
|---|---|
| $Mn_{tot}$ | 15 - 19% |
| $Si_{tot}$ | 11,5 - 14,5% |
| $Fe_{tot}$ | 34 - 40% |
| CaO | 18 - 22% |
| MgO | 6 - 8% |
| $Al_2O_3$ | 5 - 7% |

2. Fil à âme basique suivant la revendication 1, caractérisé en ce que le mélange possède la composition chimique suivante en poids :

| | |
|---|---|
| $Mn_{tot}$ | 17% |
| $Si_{tot}$ | 13% |
| $Fe_{tot}$ | 37% |
| CaO | 20% |
| MgO | 7% |
| $Al_2O_3$ | 6% |

3. Fil à âme basique suivant la revendication 1, caractérisé en ce que les matériaux de soudage sont constitués de fer pulvérulent et du support métallique.

4. Fil à âme basique suivant la revendication 1, caractérisé en ce que les agents formant le flux sont constitués de wollastonite, d'oxyde de magnésium et d'alumine.

5. Fil à âme basique suivant la revendication 1, caractérisé en ce que les désoxydants sont constitués d'alliages de ferrosilicium, d'aluminium-magnésium, de ferromanganèse et de ferrotitane.

6. Fil à âme basique suivant la revendication 1, caractérisé en ce que le manganèse est introduit dans le mélange sous la forme de laitier de manganèse et de Fe-Mn.

7. Fil à âme basique suivant la revendication 1, caractérisé en ce que le silicium est introduit dans le mélange sous la forme de laitier de manganèse et/ou de wollastonite et/ou de ferrosilicium.

8. Fil à âme basique suivant la revendication 1, caractérisé en ce que le fer est introduit sous la forme de fer pulvérulent de ferroalliages (ferrosilicium, ferromanganèse, ferrotitane).

9. Fil à âme basique suivant la revendication 1, caractérisé en ce que le CaO est introduit sous la forme de wollastonite et de laitier de manganèse.

**10.** Fil à âme basique suivant la revendication 1, caractérisé en ce que le MgO est introduit tel quel.

**11.** Fil à âme basique suivant la revendication 1, caractérisé en ce que le $Al_2O_3$ est introduit tel quel.